## Europäisches Patentamt

## European Patent Office

## Office européen des brevets

(11) Publication number: **0 176 687**
**B1**

# EUROPEAN PATENT SPECIFICATION

(45) Date of publication of the patent specification:
10.10.90

(51) Int. Cl.⁵: **F16K 1/226**

(21) Application number: **85109274.2**

(22) Date of filing: **24.07.85**

(54) **Sealing device for throttle valves.**

(30) Priority: **27.09.84 SE 8404833**

(43) Date of publication of application:
**09.04.86 Bulletin 86/15**

(45) Publication of the grant of the patent:
**10.10.90 Bulletin 90/41**

(84) Designated Contracting States:
**AT BE CH DE FR GB IT LI LU NL SE**

(56) References cited:
**AU-B- 506 099**
**DE-A- 3 151 787**
**DE-B- 1 247 104**
**DE-B- 1 802 075**
**US-A- 3 080 145**
**US-A- 4 058 290**
**US-A- 4 284 264**

(73) Proprietor: **Aktiebolaget Somas Ventiler,
Norrlandsvägen, S-661 00 Säffle(SE)**

(72) Inventor: **Hubertson, Folke Hubert, Pilgatan 15,
S-661 00 Säffle(SE)**

(74) Representative: **Hynell, Magnus, Hynell Patenttjänst AB
Box 236, S-683 02 Hagfors(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### TECHNICAL FIELD

The invention relates to a sealing device in a throttle valve comprising a valve housing with a substantially annular valve seat, having a first sealing surface, a throttle member having a second sealing surface and pivotally mounted in said valve housing so as to have said second sealing surface pressed into engagement with said first sealing surface when said valve is closed; said valve seat consisting essentially of 3 substantially annular slot, having an axis, an axial width, and inner diameter and an outer diameter, formed in said valve housing and an annular sealing ring, having an axial width, disposed within said slot, said slot having a pair of axially spaced apart side walls and a bottom wall forming the outer diameter of said annular slot, said sealing ring slidably engaging said pair of side walls, said sealing ring comprising a homogeneous annular member having a radially elongated cross-section formed by a pair of radially outwardly extending, spaced apart, parallel legs conjoined by a radially inward extending head portion, said inner diameter of said slot being greater than said inner diameter of said sealing ring as defined by the head portion of said sealing ring such that when said sealing ring is centered on the axis of said slot, said portion of said head portion protrudes from said slot; said axial width of said sealing ring being greater across said pair of legs than across said head portion; and said axial width of said slot being greater proximate said pair of legs of said sealing ring than proximate said head portion of said sealing ring.

### BACKGROUND ART

A sealing device of the type referred to in the preamble is known for instance from DE-A 3 151 787. This device is intended to define a fluid pressure loaded seal for butterfly valves. A resilient seating member is disposed in annular relation to the fluid passage of the valve so as to engage the periphery of the valve disk. It is a stated object of this device to provide an improved valve seal assembly which will seal tightly at high pressures, which will not blow out under high system pressures, and which is operable with a relatively low torque. In this regard, the internal fluid pressure acting upon the valve is used to enhance the contact pressure between the flexible seat and both the valve body and the valve seat, regardless of the direction in which fluid pressure is applied. The seat ring has a pair of legs which spread apart from a connecting point and a "stem " section projecting away from that connecting point. The groove is generally T-shaped. The seat ring is inserted into the groove with the legs of the seat disposed in the "cap " of the T and the step section of the seat ring protruding out of the shank of the groove; the stem section providing sealing contact with the disc-shaped valve closure member and the legs providing sealing contact with the bottom of the groove. Fluid under pressure tends to urge the top of one of the legs and the stem upwards, pushing the leg and stem into tighter contact against the end wall of the groove and the periphery of the disk, respectively. The operation of the known device requires that the seat ring has a high degree of resiliency. This means that the seat ring must be made of rubber or any similar polymeric material. This in its turn means that the device can not be used at high temperatures, very high pressures and in the presence of certain chemicals, which considerably limits the field of use of this device.

### DISCLOSURE OF INVENTION

The object of the invention is to provide an improved sealing device for throttle valves of the type referred to in the preamble. In particular, an object is to eliminate the disadvantages listed above of a prior art sealing device for throttle valves.

These and other objects may be accomplished by the fact that each of said legs at their free end has a flange portion extending axially away from the other of said pair of legs; said head portion having a rounded portion at its free end, said rounded portion forming said first sealing surface; said radial inward extension of said head portion being at least equal to said radial outward extension of said pair of legs; said sealing ring being formed of a resilient material to afford a head portion of considerable rigidity and resistance to radial deformation and to cause said pair of legs to spring and to be pressed axially outwardly against the side walls; said outer diameter of said slot being greater than the outer diameter of said sealing ring as defined by the free ends of said legs, and that said free ends of said legs are radially spaced apart from said bottom wall.

Further advantages and characteristics of the invention will become apparent from the appended claims and the following description of a preferred embodiment.

### DESCRIPTION OF A PREFERRED EMBODIMENT

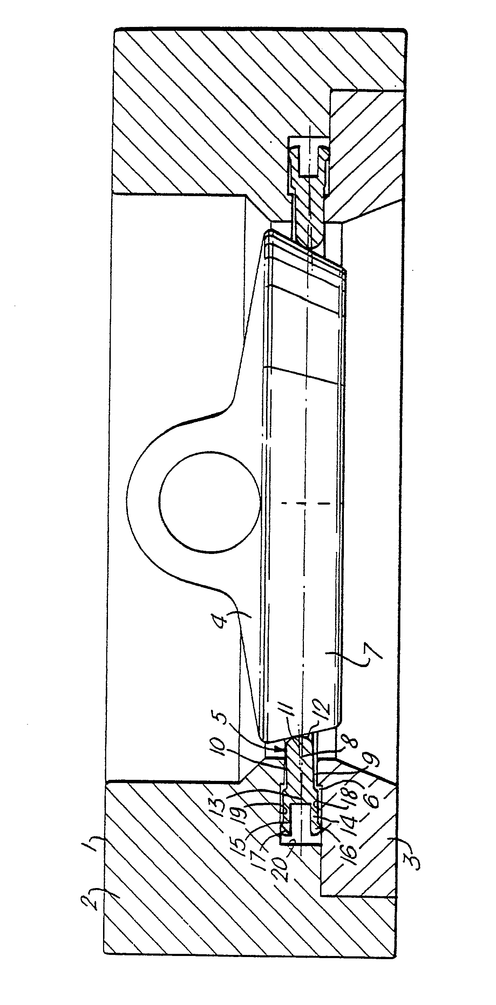

In the following description reference will be made to the drawing figure, which shows an axial section of a throttle valve with a sealing device according to the invention. The valve comprises a valve housing 1 with a main part and a cover ring 3; a pivotally mounted throttle 4; and a sealing ring 5 in an annular slot 6 in the valve housing between the main part 2 and the cover ring 3. The throttle 4 has a sealing surface 7, which according to this embodiment is of the same configuration as in US-A 4 284 264. The sealing device according to the invention is not limited, however, to be used with this throttle configuration.

The sealing ring 5 normally consists of stainless, acidproof steel; an alternative is 3 very stiff plastic material. It is also conceivable that the ring 5 consists of a composite material or is composed of several materials. The ring 5 has a section which has a "creature " -resembling configuration with an elongated body part 8. The two sides 9, 10 of the body part 8 are completely flat and parallel. At that end 7 of the ring, which is directed toward the throttle member, the body part 8 is transfigured directly into a "head" part 11 with a bluntly rounded surface 12, which constitutes the first sealing surface of the valve, against which the sealing surface 7 of the throttle 4 may be pressed.

From the "hip" 13 of the body part 8, i.e. from the peripheral part of the homogeneous part of the ring 5, a pair of annular flanges 14, 15 extend radially, symmetrically outwards. In the section illustrated, the flanges 14 and 15 form the legs of the creature-resembling figure.

On the legs 14, 15 there extend a pair of flange portions 16, 17, each being an outwardly pointing flange on the respective legs 14, 15. The flange portions 16, 17 are pressed by spring action of the legs 14, 15 against the walls 18 and 19, respectively, of the slot 6. The configuration of the ring 5 ensures the desired combination of radial rigidity, axial flexibility, and sealing ability against the two walls 18, 19 of the slot 6. The ring 5 by itself is stiff enough, which means that the two legs 14, 15 need not contact the bottom 20 of the slot 6 with their respective flange portions 16, 17. On the contrary, the slot 6 is so deep that the ring 5 may be displaced radially, i.e. the diameter of the slot 6 is greater than the outer diameter of the ring 5. The position of the ring 5 is thus adaptable to the throttle 4 when the valve is first closed. During this adaptation, the flange portions 16, 17 will slide against the parallel radial walls 18, 19 of the slot 6 without losing their sealing contact with them.

## Claims

A sealing device in a throttle valve comprising a valve housing (1) with a substantially annular valve seat, having a first sealing surface (12), a throttle member (4) having a second sealing surface (7) and pivotally mounted in said valve housing (1) so as to have said second sealing surface (7) pressed into engagement with said first sealing surface (12) when said valve is closed; said valve seat consisting essentially of a substantially annular slot (6), having an axis, and axial width, and an inner diameter and an outer diameter, formed in said valve housing (1) and an annular sealing ring (5), having an axial width, disposed within said slot, said slot (6) having a pair of axially spaced apart sides walls (18, 19) and a bottom wall (20) forming the outer diameter of said annular slot (6), said sealing ring (5) slidably engaging said pair of side walls (18, 19), said sealing ring (5) comprising a homogeneous annular member having a radially elongated cross-section formed by a pair of radially outwardly extending, spaced apart, parallel legs (14, 15) conjoined by a radially inward extending head portion (11), said inenr diameter of said slot (6) being greater than said inner diameter of said sealing ring (5) as defined by the head portion (11) of said sealing ring (5) such that when said sealing ring is centered on the axis of said slot (6), said portion of said head portion (11) protrudes from said slot; said axial width of said sealing ring (5) being greater across said pair of legs (14, 15) than across said head portion (11); and said axial width of said slot (6) being greater proximate said pair of legs (14, 15) of said sealing ring (5) than proximate said head portion (11) of said sealing ring, characterized in that each of said legs (14, 15) at their free end has a flange portion (16, 17) extending axially away from the other of said pair of legs (14, 15); said head portion (11) having a rounded portion at its free end, said rounded portion forming said first sealing surface (12); said radial inward extension of said head portion (11) being at least equal to said radial outward extension of said pair of legs (14, 15); said sealing ring (5) being formed of a resilient material to afford a head portion (11) of considerable rigidity and resistance to radial deformation and to cause said pair of legs (14, 15) to spring and to be pressed axially outwardly against side walls (18, 19); said outer diameter of said slot (6) being greater than the outer diameter of said sealing ring (5) as defined by the free ends of said legs (14, 15), and that said free ends of said legs (14, 15) are radially spaced apart from said bottom wall (20).

## Patentansprüche

Abdichtungsvorrichtung in einem Drosselventil, umfassend ein Ventilgehäuse (1) mit einem im wesentlichen ringförmigen Ventilsitz, der eine erste Dichtungsfläche (12), ein Drosselglied (4), da eine zweite Dichtungsfläche (7) besitzt und schwenkbar im Ventilgehäuse (1) gelagert ist, so daß diese zweite Dichtungsfläche (7) in den Eingriff mit der ersten Dichtungsfläche (12) gedrückt wird, wenn das Ventil geschlossen ist; wobei der Ventilsitz im wesentlichen aus einem etwa ringförmigen, im Ventilgehäuse (1) ausgebildeten, Schlitz (6) besteht, der eine Achse, eine axiale Breite und einen Innendurchmesser sowie einen Außendurchmesser aufweist, und einem ringförmigen Dichtungsring (5), der eine axiale Breite aufweist und im genannten Schlitz (6) angeordnet ist, wobei der Schlitz (6) ein Paar axial beabstandeter Seitenwände (18, 19) und einen Boden (20) besitzt, die den Außendurchmesser des ringförmigen Schlitzes (6) bilden, wobei der Dichtungsring (5) verschiebbar mit dem Seitenwandpaar (18, 19) im Eingriff steht, und wobei der Dichtungsring (5) ein homogenes ringförmiges Glied umfaßt, das einen radial verlängerten Querschnitt besitzt, der durch ein Paar radial sich nach außen erstreckender beabstandeter, paralleler Schenkel (14, 15) geformt ist, die miteinander durch einen sich radial nach innen erstreckenden Kopfteil (11) verbunden sind, wobei der Innendurchmesser des Schlitzes (6) größer ist als der Innendurchmesser des Abdichtungsringes (5), der durch den Kopfteil (11) des Abdichtungsringes (5) derart definiert ist, daß, wenn der Dichtungsring auf der Achse des Schlitzes (6) zentriert ist, der Teil des Kopfteils (11) aus dem Schlitz herausragt: und wobei die axiale Breite des Dichtungsringes (5) größer über dem Paar der Schenkel (14, 15) ist, als über dem Kopfteil (11); und wobei die axiale Breite des Schlitzes (6) größer in Nähe des Schenkelpaares (14, 15) des Dichtungsringes (5) ist als in Nähe des Kopfteiles (11) des Dichtungsringes (5), dadurch gekennzeichnet, daß jeder Schenkel (14, 15) an seinem freien Ende einen Flanschteil (16, 17) besitzt, der sich axial vom anderen Schenkel weg erstreckt; und daß der Kopfteil (11) an seinem freien Ende einen abgerundeten Teil besitzt, welcher die erste Dichtung (12) ausbildet, und daß die sich radial nach innen verlaufende Erstreckung des Kopfteils (11) mindestens der sich radial nach außen verlaufenden Erstreckung des Schenkelpaares (14, 15) gleicht; und daß der Dichtungsring (5) aus einem nachgiebigen Material geformt ist, damit ein Kopfteil (11) beträchtliche Festigkeit und Widerstandsfähigkeit gegen radiale Deformation aufweist, und damit das Schenkelpaar (14, 15) federn und axial nach außen gegen die Seitenwände (18, 19) gedrückt werden kann, und daß der Außendurchmesser des Schlitzes (6) größer ist als der Außendurchmesser des Dichtungsringes (5), wie er durch die freien Enden der Schenkel (14, 15) festgelegt ist, und wobei die freien Enden der Schenkel (14, 15) radial vom Boden (20) beabstandet sind.

## Revendications

Dispositif d'étanchéité dans une soupape d'étranglement comprenant un boîtier de soupape (1) avec un siège de soupape sensiblement annulaire, ayant une première surface d'étanchéité (12), un élément d'étranglement (4) ayant une seconde surface d'étanchéité (7) montée en pivotement à l'intérieur dudit boîtier de soupape (1) de façon que ladite seconde surface d'étanchéité (7) soit comprimée en prise avec ladite première surface d'étanchéité (12) quand ladite soupape est fermée, ledit siège de soupape étant essentiellement constitué d'une rainure (6) sensiblement annulaire, comportant un axe, une largeur axiale, un diamètre intérieur et un diamètre extérieur, formée dans ledit boîtier de soupape (1) et une bague annulaire d'étanchéité (5), ayant une largeur axiale, placée à l'intérieur de ladite rainure, ladite rainure (6) comportant deux parois latérales (18, 19) espacées dans la direction axiale et une paroi de fond (20) constituant le diamètre extérieur de ladite rainure annulaire (6), ladite bague d'étanchéité (5) venant en contact de coulissement avec lesdites parois latérales (18, 19), ladite bague d'étanchéité (5) étant constituée d'un élément annulaire homogène ayant une section transversale radialement allongée formée de deux pattes parallèles (14, 15) orientées radialement vers l'extérieur, écartées l'une de l'autre, réunies par une partie de tête (11) radialement orientée vers l'intérieur, ledit diamètre intérieur de ladite rainure (6) étant supérieur audit diamètre intérieur de ladite bague d'étanchéité (5) comme défini par la partie de tête (11) de ladite bague d'étanchéité (5) de manière qu'au moment où ladite bague d'étanchéité est centrée sur l'axe de ladite rainure (6), ladite partie de ladite partie de tête (11) fasse saillie de ladite rainure ; ladite largeur axiale de ladite bague d'étanchéité (5) étant plus grande en travers de ladite paire de pattes (14, 15) qu'en travers de ladite partie de tête (11) ; et ladite largeur axiale de ladite rainure (6) étant plus grande à proximité de ladite paire de pattes (14, 15) de ladite bague d'étanchéité (5) qu'à proximité de ladite partie de tête (11) de ladite bague d'étanchéité, caractérisé par le fait que chacune desdites pattes (14, 15) porte à son extrémité libre une partie de bride (16, 17) s'éloignant dans la direction axiale de l'autre patte de ladite paire de pattes (14, 15); ladite partie de tête (11) portant une partie arrondie à son extrémité libre, ladite partie arrondie constituant ladite première surface d'étanchéité (12) ; ledit prolongement radial vers l'intérieur de ladite partie de tête (11) étant au moins égal audit prolongement radial vers l'extérieur de ladite paire de pattes (14, 15); ladite bague d'étanchéité (5) étant constituée d'un matériau élastique pour former une partie de tête (11) de rigidité importante et résistante aux déformations radiales et pour que ladite paire de pattes (14, 15) fasse ressort et soit comprimée axialement vers l'extérieur contre les parois latérales (18, 19) ; ledit diamètre extérieur de ladite rainure (6) étant supérieur au diamètre extérieur de ladite bague d'étanchéité (5) défini par les extrémités libres desdites pattes (14, 15) ; et en ce que lesdites extrémités libres desdites pattes (14, 15) sont radialement espacées de ladite paroi du fond (20).